# EUROPÄISCHE PATENTANMELDUNG

(11) **EP 3 264 577 A1**
(43) Veröffentlichungstag der Anmeldung: **03.01.2018**
(21) Anmeldenummer: 17000539.1
(22) Anmeldetag: 31.03.2017
(51) Int. Cl.: H02M 3/158, H02M 1/00, H02M 3/155

(54) **SPANNUNGSREGELEINHEIT, FAHRZEUGSTEUERGERÄT UND VERFAHREN ZUM VORREGELN EINER VERSORGUNGSSPANNUNG**

(30) Priorität: 29.06.2016 DE 102016007943
(71) Anmelder: WABCO GmbH, 30432 Hannover (DE)
(72) Erfinder: Grünewald-Gast, Bernward, 30455 Hannover (DE)

(57) **Zusammenfassung**

Die Erfindung betrifft eine Spannungsregeleinheit (10) zur Vorregelung einer Versorgungsspannung für ein Netzteil (15), vorzugsweise Schaltnetzteil, zur Versorgung einer elektronischen Fahrzeugkomponente, insbesondere eines Fahrzeugsteuergeräts. Die Spannungsregeleinheit (10) weist wenigstens einen Eingang (12) für eine insbesondere vom Bordnetz des Fahrzeugs bereitgestellte Eingangsspannung (11) und wenigstens einen Ausgang (14) zur Abgabe der vorgeregelten Ausgangsspannung (13) auf, wobei eine zwischen Eingang (12) und Ausgang (14) geschaltete Induktivität (17) zur Sicherstellung der elektromagnetischen Verträglichkeit vorgesehen ist. Die Spannungsregeleinheit (10) zeichnet sich dadurch aus, dass die Induktivität (17) außerdem zur Erniedrigung und/oder Erhöhung der Ausgangsspannung (13) dient. Des Weiteren ist noch ein Fahrzeugsteuergerät mit einer derartigen Spannungsregeleinheit (10) und ein entsprechendes Verfahren zur Vorregelung einer Versorgungsspannung für ein Netzteil (15), vorzugsweise Schaltnetzteil, zur Versorgung einer elektronischen Fahrzeugkomponente, insbesondere eines Fahrzeugsteuergeräts, beschrieben.

## Beschreibung

Die Erfindung betrifft eine Spannungsregeleinheit gemäß dem Oberbegriff des Anspruchs 1. Des Weiteren betrifft die Erfindung ein Fahrzeugsteuergerät gemäß dem Oberbegriff des Anspruchs 12. Schließlich betrifft die Erfindung ein Verfahren zum Vorregeln der Versorgungsspannung für wenigstens eine elektronische Fahrzeugkomponente, insbesondere ein Fahrzeugsteuergerät, gemäß dem Oberbegriff des Anspruchs 13.

Elektronische Fahrzeugkomponenten, wie insbesondere Fahrzeugsteuergeräte, benötigen eine möglichst stabile Spannungs- beziehungsweise Stromversorgung. Bei derartigen Fahrzeugen handelt es sich insbesondere um Kraftfahrzeuge, wie Lastkraftwagen, Busse, oder auch Personenkraftwagen.

Die vom Bordnetz derartiger Fahrzeuge als Versorgungsspannung vorgesehene elektrische Energie wird dabei typischerweise von wenigstens einer Fahrzeugbatterie bereitgestellt oder zumindest gestützt. Darüber hinaus wird das Bordnetz während des Betriebs eines Antriebsmotors des Fahrzeugs in der Regel von wenigstens einem Generator gespeist.

In der Regel weist jede elektronische Fahrzeugkomponente ein Netzteil, typischerweise ein Schaltnetzteil, zur Anpassung der Eingangsspannung vom Bordnetz an die Anforderungen der elektronischen Fahrzeugkomponente. Dessen Ausgangsspannung wird als Versorgungsspannung für die eigentliche elektronische Fahrzeugkomponente genutzt.

Aufgrund wechselnder Lasten, beispielsweise durch Ein- und Ausschalten elektrischer Komponenten am Bordnetz, oder auch durch gelegentliches Zuführen rückgewonnener elektrischer Energie durch einzelne Komponenten kann es dabei zu deutlichen Spannungsschwankungen im Bordnetz kommen.

Eine Spannungsregeleinheit sorgt daher typischerweise dafür, dass einerseits die elektromagnetische Verträglichkeit der Komponente sichergestellt wird und andererseits bei Spannungseinbrüchen eine Erhöhung beziehungsweise eine Stützung und bei Spannungsspitzen eine Erniedrigung beziehungsweise Begrenzung der Ausgangsspannung erfolgt. Hierfür sind Schaltungen mit Dioden und Induktivitäten, wie Spulen oder Drosseln, vorgesehen. Die Bauteile für die Eingangsschaltung der Netzteile sind in der Regel für einen breiteren Spannungsbereich ausgelegt als der Nennspannungsbereich des Gesamtsystems. Beispielsweise beträgt der Nennspannungsbereich in einem 12 V-System typischerweise 9 V bis 18 V. Die Bauteile der Eingangsschaltung der Netzteile sind in der Regel für einen Spannungsbereich von 8 V bis 40 V geeignet. Mit der Sicherstellung der elektromagnetischen Verträglichkeit wird dafür dabei gesorgt, dass die entsprechende elektronische Fahrzeugkomponente andere Geräte beziehungsweise Fahrzeugkomponenten durch ungewollte elektrische oder elektromagnetische Effekte nicht stört.

Nachteilig an den bekannten Spannungsregeleinheiten ist, dass diese zur Sicherstellung der elektromagnetischen Verträglichkeit, zur Erhöhung und zur Erniedrigung der Ausgangsspannung jeweils eine Vielzahl elektronischer Bauteile erforderlich ist.

Es ist daher eine Aufgabe der Erfindung, die Spannungsregeleinheiten dahingehend zu verbessern, dass die Anzahl der elektronischen Bauteile reduziert wird. Damit soll insbesondere der Platzbedarf der elektronischen Schaltung reduziert werden. Insbesondere soll der Akzeptanzbereich bei Schwankungen der Eingangsspannung vergrößert werden.

Eine Spannungsregeleinheit mit den Merkmalen des Anspruchs 1 löst diese Aufgabe. Sie dient zur Vorregelung einer Versorgungsspannung für ein Netzteil, vorzugsweise ein Schaltnetzteil, zur Versorgung einer elektronischen Fahrzeugkomponente, insbesondere eines Fahrzeugsteuergeräts. Es ist wenigstens ein Eingang für eine insbesondere vom Bordnetz des Fahrzeugs bereitgestellte Eingangsspannung und wenigstens ein Ausgang zur Abgabe der vorgeregelten Ausgangsspannung vorgesehen. Eine zwischen Eingang und Ausgang geschaltete Induktivität dient dabei zur Sicherstellung der elektromagnetischen Verträglichkeit. Die Spannungsregeleinheit zeichnet sich dabei erfindungsgemäß dadurch aus, dass die Induktivität außerdem zur Erniedrigung und/oder Erhöhung der Ausgangsspannung dient. Indem die Induktivität gleichzeitig für mehrere Zwecke eingesetzt wird, reduziert sich die Anzahl der elektronischen Bauteile. Induktivitäten und insbesondere Drosseln zeichnen sich nämlich durch einen hohen Raumbedarf und Kosten aus, der beziehungsweise die durch Mehrfachnutzung in einer Schaltung deutlich reduziert werden kann beziehungsweise können.

Vorzugsweise ist sowohl eine Erniedrigung als auch eine Erhöhung der dem Netzteil am Ausgang zugeführten Spannung vorgesehen. Dazu wird insbesondere eine einzige Induktivität verwendet. Somit kann ein Bauteil für drei verschiedene Aufgaben verwendet werden. Damit wird die Zahl der Komponenten weiter reduziert.

Besonders bevorzugt ist wenigstens ein Schalter zur Aktivierung der Erniedrigung und/oder der Erhöhung der Spannung vorgesehen. Es handelt sich insbesondere um einen elektronischer Schalter, vorzugsweise einen Halbleiterschalter. Der wenigstens eine Schalter ist weiter vorzugsweise als Transistor oder als Transistorschaltung ausgebildet. Damit wird eine hohe Integration und kompakte Bauweise bei hoher Zuverlässigkeit, langer Lebensdauer und geringer Ausfallrate erreicht.

Vorzugsweise ist die Induktivität als Spule beziehungsweise Drossel ausgebildet. Es handelt sich insbesondere um eine Speicherdrossel mit einem Kern. Derartige Bauteile sind besonders für eine Mehrfachnutzung in erfindungsgemäßer Weise geeignet.

Die Induktivität ist bevorzugt mittels eines insbesondere ausgangsseitigen Schalters zur Erhöhung der Ausgangsspannung verwendbar. Dies bedeutet, dass die Erhöhung der Ausgangsspannung auf diese Weise schaltbar ist, also vorzugsweise aktivierbar und deaktivierbar. Hierzu ist vorzugsweise wenigstens ein Kondensator und/oder wenigstens eine Diode als zusätzliche Bauteile angeordnet. Diese Bauteile sind insbesondere ausgangsseitig und/oder schaltbar vorgesehen. Damit kann aus der Induktivität zusammen mit der wenigstens einen Diode und/oder dem wenigstens einen Kondensator eine elektronische Schaltung zur Erhöhung der Ausgangsspannung geschaltet werden. Da die hier betroffenen elektronischen Fahrzeugkomponenten in der Regel keinen hohen Strombedarf aufweisen, lassen sich kurze Spannungseinbrüche auf diese Weise gut überbrücken.

Bevorzugt ist die Induktivität mittels eines insbesondere eingangsseitigen Schalters zur Erniedrigung der Ausgangsspannung verwendbar. Dies bedeutet, dass die Erniedrigung der Ausgangsspannung auf diese Weise schaltbar ist, also vorzugsweise aktivierbar und deaktivierbar. Hierzu ist/sind vorzugsweise wenigstens ein Kondensator und/oder wenigstens eine Diode als zusätzliche Bauteile angeordnet. Diese Bauteile sind insbesondere ausgangsseitig und/oder schaltbar vorgesehen, der Kondensator bevorzugt ausgangsseitig. Damit kann aus der Induktivität zusammen mit der wenigstens einen Diode und/oder dem wenigstens einen Kondensator eine elektronische Schaltung zur Erniedrigung der Ausgangsspannung geschaltet werden. Spannungsspitzen lassen sich auf diese Weise herausfiltern.

In einer bevorzugten Ausführung der Erfindung ist wenigstens eine Steuerschaltung zur Aktivierung und Deaktivierung des wenigstens einen Schalters vorgesehen. Diese Steuerschaltung dient zur insbesondere automatischen Schaltung, also Aktivierung beziehungsweise Deaktivierung des entsprechenden Schalters. Damit lässt sich sowohl die Erniedrigung als auch die Erhöhung der Ausgangsspannung steuern.

Die Aktivierung und/oder Deaktivierung des wenigstens einen Schalters erfolgt vorzugsweise automatisch. Vorzugsweise ist hierzu eine automatische Steuerung vorgesehen. Die Automatisierung erfolgt vorzugsweise durch die Spannungsregeleinheit. Damit kann die Erniedrigung und/oder Erhöhung der Ausgangsspannung auf automatische Weise gesteuert werden, vorzugsweise ohne menschlichen oder zentralisierten Eingriff.

Die Aktivierung und/oder Deaktivierung des wenigstens einen Schalters erfolgt bevorzugt bei Erreichen von Grenzwerten, insbesondere vordefinierten Grenzwerten. Insbesondere erfolgt das Aktivierung und/oder Deaktivierung des wenigstens einen Schalters bei Überschreiten und/oder Unterschreiten von Grenzwerten. Vorzugsweise kann dies vollautomatisch bei Erreichen bestimmter Grenzwerte erfolgen.

Bevorzugt erfolgt bei Überschreiten eines vordefinierten Grenzwertes der Eingangsspannung durch Betätigung, insbesondere zumindest zeitweises Öffnen eines eingangsseitig der Induktivität angeordneten Schalters eine Erniedrigung der Ausgangsspannung. Dies erfolgt insbesondere durch Verbinden der Induktivität mit Masse. Dazu wird vorzugsweise eine Diode verwendet. Durch zumindest zeitweises Öffnen des eingangsseitig der Induktivität angeordneten Schalters erfolgt eine Begrenzung der Ausgangsspannung, insbesondere indem die in der Induktivität gespeicherte Energie mittels der masseseitigen Diode in den Ausgangskondensator umgeladen wird. Dies entspricht der Arbeitsweise und der Schaltung eines sogenannten Abwärtswandlers (buck converter). Insbesondere erfolgt die Aktivierung und Deaktivierung des Schalters typischerweise in rascher Folge vorzugsweise periodisch. Die Ausgangsspannung wird damit gesenkt. Die Induktivität zur Sicherstellung der elektromagnetischen Verträglichkeit wird dabei gleichzeitig zu diesem Zweck verwendet.

Insbesondere erfolgt bei Unterschreiten eines vordefinierten Grenzwertes der Eingangsspannung durch Betätigung eines ausgangsseitig der Induktivität angeordneten Schalters eine Erhöhung der Ausgangsspannung. Dies wird insbesondere durch ausgangsseitiges Verbinden der Induktivität mit Masse erreicht. Der Schalter verbindet vorzugsweise dazu die Induktivität ausgangsseitig direkt mit Masse, um den Strom durch die Induktivität zu vergrößern. Eine Diode ist dabei ausgangsseitig nach dem Schalter außerdem in Reihe mit der Induktivität geschaltet, um die in der Induktivität gespeicherte Energie bei geöffnetem Schalter an den Ausgangskondensator zu übertragen. Dies entspricht der Arbeitsweise und der Schaltung eines sogenannten Aufwärtswandlers (boost converter, step-up converter). Es erfolgt damit eine Spannungserhöhung am Ausgang. Die Induktivität zur Sicherstellung der elektromagnetischen Verträglichkeit wird dabei gleichzeitig zu diesem Zweck verwendet.

Die eingangs geschilderte Aufgabe wird außerdem gelöst durch ein Fahrzeugsteuergerät mit den Merkmalen des Anspruchs 12. Das Fahrzeugsteuergerät ist mit einem Netzteil, insbesondere Schaltnetzteil, zur Spannungsversorgung und mit einer Spannungsregeleinheit zur Vorregelung der Versorgungsspannung für das Netzteil ausgerüstet. Die Spannungsregeleinheit ist dabei vorzugsweise gemäß vorstehenden Beschreibungen ausgebildet. Damit wird die erfindungsgemäße Spannungsregeleinheit in ein entsprechendes Fahrzeugsteuergerät verwendet, vorzugsweise in ein solches integriert. Darüber hinaus ist insbesondere auch ein Netzteil in ein derartiges Fahrzeugsteuergerät integriert, wobei vorzugsweise die erfindungsgemäße Spannungsregeleinheit zur Vorregelung der als Versorgungsspannung für das Netzteil dienenden Spannung dient.

Die eingangs geschilderte Aufgabe wird außerdem gelöst durch ein Verfahren zum Vorregeln einer Versorgungsspannung für wenigstens eine elektronische Fahrzeugkomponente, insbesondere ein Fahrzeugsteuergerät, mit den Merkmalen des Anspruchs 13. Die elektronische Fahrzeugkomponente weist eine Spannungsregeleinheit auf, vorzugsweise gemäß vorstehenden Schilderungen. Die elektromagnetische Verträglichkeit der Spannungsregeleinheit wird dabei mittels einer zwischen Eingang und Ausgang der Spannungsregeleinheit geschalteten Induktivität sichergestellt. Das Verfahren ist dadurch gekennzeichnet, dass die Induktivität parallel zur Erniedrigung und/oder Erhöhung der Ausgangsspannung verwendet wird. Damit wird eine Induktivität für mehrere Zwecke eingesetzt, insbesondere als Mehrfachnutzung.

Vorzugsweise wird die Erniedrigung und/oder Erhöhung der dem Netzteil als Ausgangsspannung der Spannungsregeleinheit zugeführten Spannung mittels der Induktivität vorgenommen, gegebenenfalls in Zusammenwirkung mit wenigstens einem weiteren elektronischen Bauelement. Die Induktivität wird folglich zur Vorregelung der Ausgangsspannung verwendet, insbesondere neben der Sicherstellung der elektromagnetischen Verträglichkeit.

Weiter bevorzugt werden/wird wenigstens eine Diode und/oder wenigstens ein Kondensator eingangsseitig und/oder ausgangsseitig hinzu geschaltet. Durch Zusammenwirken der wenigstens einen Diode und/oder des wenigstens einen Kondensators mit der Induktivität erfolgt die Vorregelung der Ausgangsspannung durch Erniedrigung und/oder Erhöhung. Je nach eingangsseitiger und/oder ausgangsseitiger Anordnung der elektronischen Bauteile kann die entsprechende Funktion sichergestellt werden.

Die Erniedrigung und/oder Erhöhung der Ausgangsspannung der Spannungsregeleinheit wird mittels der Induktivität insbesondere durch wenigstens einen Schalter geschaltet. Bei dem Schalter handelt es sich vorzugsweise um einen elektronischen Schalter, insbesondere wenigstens einen Transistor. Damit kann eine gezielte Aktivierung und/oder Deaktivierung der Schaltung zur Begrenzung und/oder Stabilisierung der Ausgangsspannung vorgenommen werden.

Besonders bevorzugt wird die Erniedrigung und/oder Erhöhung der Ausgangsspannung der Spannungsregeleinheit automatisch aktiviert und/oder deaktiviert. Dies erfolgt vorzugsweise anhand vordefinierter Grenzwerte. Damit wird eine automatisierte Vorregelung der Ausgangsspannung ermöglicht.

Vorzugsweise wird bei Überschreiten eines vordefinierten Grenzwertes der Eingangsspannung ein eingangsseitig der Induktivität angeordneter Schalter betätigt, insbesondere zumindest zeitweise geöffnet. Dadurch erfolgt eine Erniedrigung der Ausgangsspannung. Hierzu wird bevorzugt die Induktivität eingangsseitig mittels einer Diode mit Masse verbunden. Der Strom durch die Induktivität kann dann bei geöffnetem Schalter durch die Diode in den Kondensator fließen, so dass die in der Induktivität gespeicherte Energie in den Kondensator übertragen wird. Nach teilweisem Absinken der Spannung kann der Schalter wieder geschlossen werden.

Vorzugsweise wird bei Unterschreiten eines vordefinierten Grenzwertes der Eingangsspannung ein ausgangsseitig der Induktivität angeordneter Schalter betätigt. Dadurch erfolgt eine Erhöhung der Ausgangsspannung. Hierzu wird bevorzugt die Induktivität über den Schalter ausgangsseitig mit Masse verbunden, so dass der Strom beim anschließenden Öffnen des Schalters über die Induktivität und die Diode zum Kondensator fließen kann.

Bevorzugte Ausführungsbeispiele der Erfindung werden im Folgenden anhand der Figuren der Zeichnung näher beschrieben. In dieser zeigen:
- Fig. 1: eine Spannungsregeleinheit mit den erforderlichen Komponenten zur Sicherstellung der elektromagnetischen Verträglichkeit,
- Fig. 2: ein Prinzipschaltbild einer Spannungsregeleinheit zur Erhöhung der Ausgangsspannung,
- Fig. 3: ein Prinzipschaltbild einer Spannungsregeleinheit zur Erniedrigung der Ausgangsspannung,und
- Fig. 4: eine erfindungsgemäße Spannungsregeleinheit zur Sicherstellung der elektromagnetischen Verträglichkeit, zur Erhöhung der Ausgangsspannung und zur Erniedrigung der Ausgangsspannung.

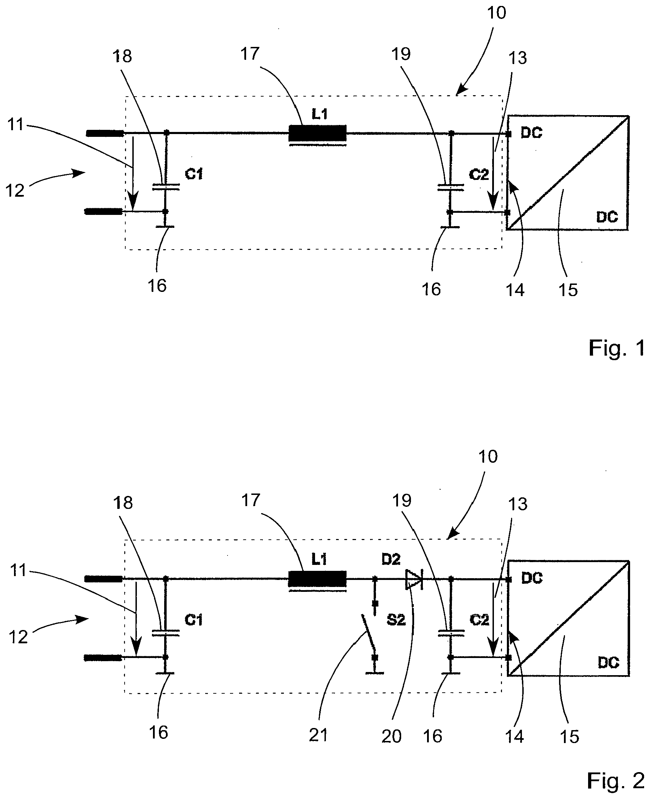

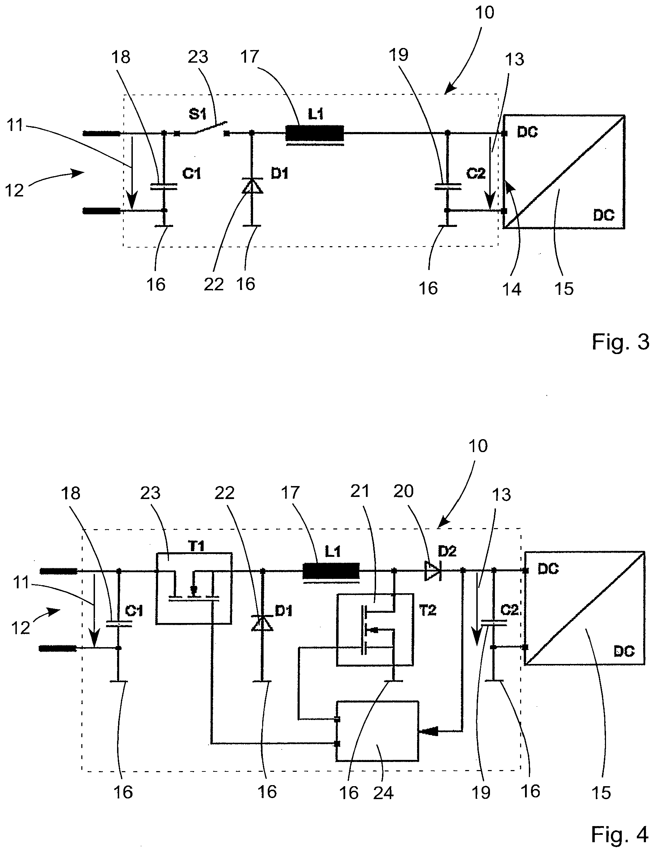

In den Fig. 1 bis 3 sind unterschiedliche elektronische Prinzipschaltpläne zur Veranschaulichung verschiedener Betriebsmodi der hier in Rede stehenden Spannungsregeleinheiten 10 gezeigt. Fig. 4 zeigt schließlich einen speziellen Schaltplan einer erfindungsgemäßen Spannungsregeleinheit 10 mit den entsprechenden Bauteilen in der Gesamtschaltung. Die Komponenten der Spannungsregeleinheit 10 sind in den Figuren der Zeichnung zur besseren Übersicht mit einem gestrichenen Rahmen umgeben.

Die Spannungsregeleinheit 10 dient im Kern dazu, eine Eingangsspannung 11 an einem Eingang 12 entgegenzunehmen und als Ausgangsspannung 13 an einem Ausgang 14 an ein Netzteil 15 abzugeben. Dabei wird die Ausgangsspannung 13 gegenüber der Eingangsspannung 11 geregelt, also im vorliegenden Fall insbesondere in bestimmten vorgegebenen Grenzen gehalten. Die Spannungsregeleinheit 10 dient damit als sogenannter Vorregler für das damit versorgte Netzteil 15.

Bei dem Netzteil 15 handelt es sich insbesondere um ein Schaltnetzteil. In den Figuren der Zeichnung ist das Netzteil 15 jeweils als Gleichspannungswandler dargestellt. Eine Gleichspannung (Direct Current / DC) wird dazu am links gezeigten Eingang des Netzteils 15 typischerweise in eine andere Gleichspannung (DC) am rechts dargestellten Ausgang des Netzteils 15 umgewandelt. Das Netzteil 15 nimmt dazu die Ausgangsspannung 13 der Spannungsregeleinheit 10 entgegen, bei der es sich üblicherweise um eine Gleichspannung handelt. Diese Gleichspannung wird dann mittels des Netzteils 15 in eine zur Versorgung einer hier nicht gezeigten elektronischen Fahrzeugkomponente, beispielsweise eines Fahrzeugsteuergeräts, geeignete Gleichspannung transformiert.

Zur Sicherstellung der elektromagnetischen Verträglichkeit der Spannungsversorgung mittels des Netzteils 15 und damit auch der damit versorgten Fahrzeugkomponente werden, wie dies zunächst Fig. 1 dargestellt ist, entsprechende elektronische Bauteile vorgesehen. Durch die Spannungsregeleinheit 10 erfolgt somit eine Filterung oder Regelung der Ausgangsspannung 13 gegenüber der Eingangsspannung 11. Damit wird eine Beeinflussung oder Störung anderer Fahrzeugkomponenten oder externer Geräte durch elektrische oder elektromagnetische Einflüsse vermieden.

Bei den elektronischen Bauteilen handelt es sich zunächst um eine Induktivität 17, die hier als sogenannte Drosselspule oder auch Speicherdrossel ausgebildet ist, also als Spule mit einem magnetischen Kern. Der magnetische Kern erhöht die Größe der Induktivität bekanntermaßen deutlich gegenüber einer einfachen Luftspule. Die einzige Spule beziehungsweise Induktivität 17 ist hier auch zusätzlich schaltplantypisch mit L1 bezeichnet.

Darüber hinaus sind zwei Kondensatoren 18 und 19 vorgesehen. Der in der Zeichnung zusätzlich mit C1 bezeichnete Kondensator 18 ist zur Glättung der Eingangsspannung 11 parallel zum Eingang 12 geschaltet. Hierdurch werden Wechselspannungsanteile der Eingangsspannung 11 gefiltert und größtmöglich beseitigt. Der zweite, hier auch als C2 bezeichnete Kondensator 19 ist ausgangsseitig der Spannungsregeleinheit 10 parallel zum Ausgang 14 geschaltet. Hierdurch erfolgt eine zusätzliche Dämpfung ausgangsseitig und damit eine Glättung der Ausgangsspannung 13.

Die Induktivität 17 als sogenannte Drosselspule stellt einen hohen Widerstand für hochfrequente Signale dar, so dass diese entsprechend gedämpft werden. Der Gleichspannungsanteil und niederfrequente Signale können dagegen ungehindert oder zumindest nahezu ungehindert passieren. In Kombination mit den beiden Kondensatoren 18 und 19 stellt damit die Induktivität 17 die elektromagnetische Verträglichkeit sicher. Die Kondensatoren 18 und 19 sind jeweils noch mit Masse 16 verbunden, wie beispielsweise dem Fahrzeugchassis.

Da das nachgeschaltete Netzteil 15 schrittweise einen bevorzugten Arbeitsbereich der Eingangsspannung 11 aufweist, ist die Spannungsregeleinheit 10 erfindungsgemäß dazu ausgebildet, ein Verlassen dieses vorgegebenen Eingangsspannungsbereiches zu kompensieren, vorzugsweise automatisch. Hierzu kann einerseits eine Erhöhung beziehungsweise Stützung oder Stabilisierung der Ausgangsspannung 13 oder andererseits eine Begrenzung beziehungsweise Erniedrigung der Ausgangsspannung 13 vorgenommen werden.

Dieses Regeln der Ausgangsspannung 13 ist dabei jeweils bezogen auf die entsprechende Eingangsspannung 11, die an der Spannungsregeleinheit 10 anliegt. Diese Eingangsspannung 11 wird typischerweise durch eine Spannungsversorgung des Fahrzeugs, insbesondere ein nicht gezeigtes Bordnetz, bereitgestellt. Zur Bereitstellung der Stromversorgung dient in der Regel ein Generator des Fahrzeugs, wie eine Lichtmaschine oder ähnliches. Durch diesen wird eine entsprechende Versorgungsspannung bereitgestellt. Zur Stützung der Versorgungsspannung dient typischerweise eine Batterie oder ähnliches, vorzugsweise eine Fahrzeugbatterie. Gegebenenfalls können zumindest zeitweise auch nur Batterien zur Versorgung dienen.

In der Fig. 2 ist hierzu ein Prinzipschaltbild der Spannungsregeleinheit 10 gezeigt, die entsprechende Komponenten zur Erhöhung der Ausgangsspannung 13 gegenüber der Eingangsspannung 11 aufweist.

Dies ist dann erforderlich, wenn der bevorzugte Spannungsbereich des Eingangsnetzteils 15 nach unten hin verlassen wird, also eine untere Grenze der Ausgangsspannung 13 unterschritten wird. Eine entsprechende Schaltung gemäß Fig. 2 dient dann dazu, gerade für eine Stützung oder Erhöhung der Ausgangsspannung 13 zu sorgen.

Mithilfe einer Diode 20 (D2) und eines Schalters 21 (S2) kann dabei die Induktivität 17 (Spule L1) beispielsweise nach Art eines Aufwärtswandlers beziehungsweise Boost-up-Converters geschaltet werden.

Die in der Induktivität 17 beim Schließen des Schalters 21 gespeicherte Energie wird beim Öffnen des Schalters 21 als Stromfluss über die Diode 20 zusätzlich an den Ausgang 14 abgegeben. Damit erhöht sich auch die Ausgangsspannung 13 gegenüber dem Wert der Eingangsspannung 12 entsprechend der Dimensionierung der Bauteile. Vor allem bestimmt aber die Größe der Induktivität 17 die Spannungserhöhung. Durch regelmäßiges Schalten des Schalters 21 kann dabei im Durchschnitt eine Spannungserhöhung gegenüber der Eingangsspannung 12 erfolgen.

Der nächste Schließvorgang des geöffneten Schalters 21 sollte dabei vorzugsweise spätestens dann erfolgen, wenn die in der Induktivität 17 gespeicherte Energie durch Stromabgabe nahezu vollständig abgegeben wurde. So kann ein erneutes Einspeichern erfolgen. Damit wird eine repetitive oder auch periodische Arbeitsweise ermöglicht.

Eine Glättung der Ausgangsspannung 13 wird hier insbesondere über den Kondensator 19 sichergestellt. Dieser sorgt dafür, dass entstehende Wechselspannungsanteile aufgrund des variierenden Stromflusses der Induktivität 17 durch Laden und Entladen des Kondensators 19 gemittelt werden. Im Ergebnis entsteht durch das regelmäßige Schalten des Schalters 21 somit eine gegenüber der Eingangsspannung 11 im Mittel erhöhte Ausgangsspannung 13. Da dabei die zur Sicherstellung der elektromagnetischen Verträglichkeit vorgesehene Induktivität 17 auch zu diesem Zweck verwendet wird, werden weitere derartige Bauteile eingespart.

In Fig. 3 ist in entsprechender Weise ein Prinzipschaltbild einer Schaltung zur Begrenzung der Ausgangsspannung 13 gezeigt.

Gegenüber der Schaltung der Fig. 1 sind hier eine Diode 22 (auch D1) und ein Schalter 23 (auch S1) hinzugefügt worden. Der Schalter 23 ist dabei zwischen dem Eingang 12 und der Induktivität 17 in Serie mit der Induktivität 17 angeordnet. Die Diode 22 ist in Sperrrichtung mit Masse 16 verbunden. Dementsprechend lässt sich mit dem Schalter 23 die Verbindung der Induktivität 17 mit der Eingangsspannung 11 am Eingang 12 trennen.

Mithilfe der Diode 22 und des Schalters 21 kann somit die Induktivität 17 beispielsweise nach Art eines Abwärtswandlers geschaltet sein.

Solange der Schalter 23 geschlossen ist, entspricht die Ausgangsspannung 14 der Eingangsspannung 11. Dies rührt daher, dass bei geschlossenem Schalter 23 praktisch der Zustand aus Fig. 1 vorhanden ist. Die Diode 22 liegt nämlich in Sperrrichtung zur Eingangsspannung 11. Die Eingangsspannung 11 liegt an der Induktivität 17 an, die diese wiederum an den Ausgang 14 als Ausgangsspannung 13 weiterleitet. Bei Öffnen des Schalters 23 versucht die Induktivität 17 nunmehr, den Stromfluss aufrecht zu erhalten mit abnehmendem Strom. Dies geschieht über die Verbindung mit Masse 16 mittels der Diode 22.

Bei erneutem Schließen des Schalters 23 liegt die Diode 22 wieder in Sperrrichtung zur Eingangsspannung 11, so dass es zu einem ansteigenden Stromfluss in die Induktivität 17 kommt ausgehend vom Eingang 12, also zur Speicherung elektrischer Energie. Nunmehr baut sich der Stromfluss durch die Induktivität 17 wieder auf, sodass im Ergebnis wiederum eine ansteigende Spannung am Ausgang 14 anliegt.

Durch wiederholtes oder sogar periodisches Öffnen und Schließen des Schalters 23 wird dafür gesorgt, dass durch Einbindung der Induktivität 17 im Mittel eine geringere Ausgangsspannung 13 am Ausgang 14 anliegt, als diese eingangsseitig in Form der Eingangsspannung 11 vorgesehen ist. Durch den über dem Ausgang 14 angelegten Kondensator 19 wird außerdem eine Glättung der Ausgangsspannung 13 erreicht. Somit wird das Einspeichern und Ableiten elektrischen Stroms in die beziehungsweise aus der Induktivität 17 über den Kondensator 19 abgewickelt.

Auch in diesem Fall wird lediglich eine einzelne Induktivität 17 für mehrere Zwecke verwendet. Zum einen sorgt die Induktivität 17 zusammen mit den Kondensatoren 18 und 19 zunächst für die Sicherstellung der elektromagnetischen Verträglichkeit. Darüber hinaus kann die Induktivität 17 gleichzeitig zur Begrenzung der Ausgangsspannung 13 im Falle einer zu hohen Eingangsspannung 11 genutzt werden. Damit wird auch in diesem Fall eine Verwendung mehrerer Induktivitäten in der Schaltung vermieden.

Durch geeignete Dimensionierung sowohl der Induktivität 17 als auch der Kondensatoren 18 und 19 lassen sich die einzelnen Funktionen der hier gezeigten Schaltungen aneinander und an die übrigen Erfordernisse anpassen. Im Ergebnis sind die maximal und minimal zu erwartenden Werte der Eingangsspannung 11 und die entsprechenden maximalen und minimal vorzusehenden Werte der Ausgangsspannung 13 dabei zu berücksichtigen. Es handelt sich dabei um sogenannte Grenzwerte.

Dementsprechend müssen einerseits eine hinreichend große Induktivität 17 und andererseits hinreichend groß dimensionierte Kondensatoren 18 und 19 vorgesehen sein, um in jedem Fall die Einhaltung der entsprechenden Grenzwerte sicherzustellen. Durch Verwendung lediglich einer einzigen Induktivität 17 können derartige, viel Platz und vergleichsweise hohe Kosten erfordernde Bauteile in ihrer Anzahl reduziert werden. Gegenüber den üblichen Schaltungen mit mehreren Induktivitäten lässt sich hiermit für eine Reduzierung der Bauteilanzahl bei mehreren gleichzeitig einzuhaltenden Randbedingungen sorgen.

In der Fig. 4 ist schließlich ein konkretes Beispiel einer Schaltung einer erfindungsgemäßen Spannungsregeleinheit 10 gezeigt. Statt der in den Prinzipschaltungen der Fig. 1 bis 3 gezeigten Schaltern 21 und 23 in Form einfacher Ausschalter werden in diesem Fall Transistoren T2 beziehungsweise T1 als Schalter 21 beziehungsweise 23 verwendet. Transistoren eignen sich besonders als schnell schaltbare, wartungsfreie und langlebige elektronische Schaltelemente.

Zur Steuerung der Spannungsregeleinheit 10 ist außerdem eine Steuerschaltung 24 skizziert. Diese Steuerschaltung 24 dient zur Ansteuerung der Transistoren als Schalter 21 und 23.

Die Steuerschaltung 24 arbeitet dabei mit einem Abzweig der Ausgangsspannung 13. Anhand der zugeführten Ausgangsspannung 13 kann die Steuerschaltung 24 dementsprechend für eine Ansteuerung der Transistoren 21 und 23 sorgen. Dabei wird typischerweise eine entsprechende getaktete Ansteuerung der Transistoren 21 und 23 vorgenommen. Dies ist erforderlich, um den jeweiligen Schaltungszweck zu erreichen und gleichzeitig ein vollständiges Entladen der Induktivitäten 17 zu verhindern. Eine Reduzierung beziehungsweise Erhöhung der Ausgangsspannung 13 kann nämlich lediglich durch einen Umladebeziehungsweise Umspeicherprozess erfolgen. Durch Wahl der richtigen Zeitkonstanten für das Schalten der Transistoren 21 und 23 kann die entsprechende gewünschte resultierende Ausgangsspannung 13 eingestellt werden.

Das erfindungsgemäße Verfahren läuft dabei insbesondere wie folgt ab:
Im Falle einer überhöhten Ausgangsspannung 13 wird die Steuerschaltung 24 aktiv und schaltet den Transistor 23 auf Sperrbetrieb. Dies bedeutet, dass in der analogen Beschreibung mit den Schaltern 21 und 23 statt der Transistoren 21 und 23 der Schalter 23 (entsprechend dem Transistor 23) geöffnet wird. Hierdurch kommt es zu einem Absenken der Ausgangsspannung 13 durch entsprechende Entladung der Induktivität 17.

Nach Ablauf einer entsprechenden vordefinierten oder gemessenen Zeitkonstante wird der Transistor 23 wieder auf leitend geschaltet. Dann kann die Induktivität 17 wieder durch die Eingangsspannung 11 versorgt werden. Es kommt wiederum zu einem ansteigenden Stromfluss und entsprechenden Magnetfeldaufbau in der Spule 17. Hierdurch wird wieder eine ansteigende Ausgangsspannung 13 erreicht. Im Ergebnis ist damit die Ausgangsspannung 13 gegenüber der Eingangsspannung 11 reduziert. Durch abwechselndes Laden und Entladen des nachgeschalteten Kondensators 19 wird dabei die Ausgangsspannung 13 auch geglättet.

Im Falle eines Unterschreitens der gewünschten Ausgangsspannung 13 beziehungsweise des zulässigen Versorgungsbereichs des Netzteils 15 sorgt die Steuerschaltung 24 dafür, dass der Transistor 21 umgeschaltet wird. Indem der Transistor 21 nunmehr gegenüber Masse 16 leitend gemacht wird, wird die Induktivität 17 an ihrem Ausgang gegenüber Masse 16 kurzgeschlossen. Der damit steigende Stromfluss durch die Induktivität 17 wird bei anschließendem Umschalten des Transistor 21 in den Sperrbetrieb über die Diode 20 an den Ausgang 14 zusätzlich zur Eingangsspannung 11 abgegeben. Die Induktivität 17 versucht den Stromfluss aufrecht zu erhalten, sodass sich die resultierende Spannung auf die Eingangsspannung 11 aufaddiert. Im Ergebnis kommt es zu einer gegenüber der Eingangsspannung 11 erhöhten Ausgangsspannung 13.

Durch abwechselndes Schalten des Transistors 21 in den Sperr- und Leitbetrieb kommt es zu wiederholten Aufbau- und Abbauvorgängen des Stromflusses durch die beziehungsweise mittels der Induktivität 17. Die steigenden und fallenden Flanken der erhöhten Ausgangsspannung 13 werden auch hier wiederum über den Kondensator 19 zu einer insgesamt gegenüber der Eingangsspannung 11 erhöhten Ausgangsspannung 13 geglättet. Im Ergebnis ist auf jeden Fall die Ausgangsspannung 13 größer als die Eingangsspannung 11.

Sobald die Steuerschaltung 24 wieder eine Rückkehr in die für das Netzteil 15 vorgegebenen Grenzen beziehungsweise Grenzwerte feststellt, werden die jeweiligen alternierenden Schaltvorgänge der Transistoren 21 und 23 beendet. In diesem, auch als Normalzustand bezeichneten Zustand, ist der Transistor 23 leitend und der Transistor 21 ist nichtleitend eingestellt. Dieser Zustand entspricht im Ergebnis dem im Prinzipschaltbild der Fig. 1 gezeigten Betrieb zur Einhaltung der elektromagnetischen Verträglichkeit.

Die Steuerschaltung 24 sorgt dabei dafür, dass die Ausgangsspannung 13 jederzeit in den vorgegebenen Grenzen gehalten wird. Abhängig von der Höhe der Eingangsspannung 11 wird die Schaltung der Transistoren 21 und 23 entsprechend vorgenommen.

## Patentansprüche

1. Spannungsregeleinheit zur Vorregelung einer Versorgungsspannung für ein Netzteil (15), vorzugsweise Schaltnetzteil, zur Versorgung einer elektronischen Fahrzeugkomponente, insbesondere eines Fahrzeugsteuergeräts, mit wenigstens einem Eingang (12) für eine insbesondere vom Bordnetz des Fahrzeugs bereitgestellte Eingangsspannung (11) und mit wenigstens einem Ausgang (14) zur Abgabe der vorgeregelten Ausgangsspannung (13), wobei eine zwischen Eingang (12) und Ausgang (14) geschaltete Induktivität (17) vorgesehen ist, wobei die Induktivität (17) Bestandteil eines Filters zur Verbesserung der elektromagnetischen Eigenschaften der Spannungsregeleinheit ist, **dadurch gekennzeichnet, dass** die Induktivität (17) außerdem als Energiespeicher eines Abwärtswandlers zur Erniedrigung der Ausgangsspannung (13) gegenüber der Eingangsspannung (11) dient und/oder die Induktivität (17) außerdem als Energiespeicher eines Aufwärtswandlers zur Erhöhung der Ausgangsspannung (13) gegenüber der Eingangsspannung (11) dient.

2. Spannungsregeleinheit nach Anspruch 1, **dadurch gekennzeichnet, dass** sowohl eine Erniedrigung als auch eine Erhöhung der dem Netzteil (15) am Ausgang (14) zugeführten Spannung vorgesehen ist.

3. Spannungsregeleinheit nach Anspruch 1 oder 2, **dadurch gekennzeichnet, dass** wenigstens ein elektronischer Schalter, zur Aktivierung der Erniedrigung und/oder der Erhöhung vorgesehen ist, wobei der wenigstens eine Schalter (21, 23) vorzugsweise als Transistor ausgebildet ist.

4. Spannungsregeleinheit nach einem der vorhergehenden Ansprüche, **dadurch gekennzeichnet, dass** die Induktivität (17) als Spule oder Drossel oder als Speicherdrossel mit einem Kern ausgebildet ist.

5. Spannungsregeleinheit nach einem der vorhergehenden Ansprüche, **dadurch gekennzeichnet, dass** die Induktivität (17) mittels eines ausgangsseitigen Schalters (21) zur Erhöhung der Ausgangsspannung (13) verwendbar ist, wobei hierzu wenigstens ein Kondensator (19) und/oder wenigstens eine Diode (20) ausgangsseitig und/oder schaltbar angeordnet sind.

6. Spannungsregeleinheit nach einem der vorhergehenden Ansprüche, **dadurch gekennzeichnet, dass** die Induktivität (17) mittels eines eingangsseitigen Schalters (23) zur Erniedrigung der Ausgangsspannung (13) vorgesehen ist, wobei hierzu wenigstens ein Kondensator (19) und/oder wenigstens eine Diode (22) ausgangsseitig und/oder schaltbar angeordnet sind.

7. Spannungsregeleinheit nach einem der vorhergehenden Ansprüche, **dadurch gekennzeichnet, dass** wenigstens eine Steuerschaltung (24) zur Aktivierung und/oder Deaktivierung des wenigstens einen Schalters (21, 23) vorgesehen ist.

8. Spannungsregeleinheit nach einem der vorhergehenden Ansprüche, **dadurch gekennzeichnet, dass** die Aktivierung und/oder Deaktivierung des wenigstens einen Schalters (21, 23) automatisch arbeitet.

9. Spannungsregeleinheit nach einem der vorhergehenden Ansprüche, **dadurch gekennzeichnet, dass** die Aktivierung und/oder Deaktivierung des wenigstens einen Schalters (21, 23) bei Erreichen und/oder bei Überschreiten und/oder Unterschreiten vordefinierter Grenzwerte erfolgt.

10. Spannungsregeleinheit nach einem der vorhergehenden Ansprüche, **dadurch gekennzeichnet, dass** bei Überschreiten eines vordefinierten Grenzwertes der Eingangsspannung (11) durch zumindest zeitweises Öffnen eines eingangsseitig der Induktivität (17) angeordneten Schalters (23) eine Begrenzung der Ausgangsspannung (13) erfolgt, insbesondere indem die in der Induktivität (17) gespeicherte Energie über die Diode (22) in den Kondensator (19) übertragen wird.

11. Spannungsregeleinheit nach einem der vorhergehenden Ansprüche, **dadurch gekennzeichnet, dass** bei Unterschreiten eines vordefinierten Grenzwertes der Eingangsspannung (11) durch Betätigung eines ausgangsseitig der Induktivität (17) angeordneten Schalters (21) eine Erhöhung der Ausgangsspannung (13) erfolgt, insbesondere durch ausgangsseitiges Verbinden der Induktivität (17) mit Masse (16), um den Strom durch die Induktivität (17) zu erhöhen, wobei bei einem ausgeschalteten Masseschalter (21) eine Diode (20) ausgangsseitig in Reihe mit der Induktivität (17) geschaltet ist, so dass der Strom in den Kondensator (19) fließt.

12. Fahrzeugsteuergerät mit einem Netzteil, insbesondere Schaltnetzteil, zur Spannungsversorgung und mit einer Spannungsregeleinheit (10) nach einem der vorhergehenden Ansprüche zur Vorregelung der Versorgungsspannung für das Netzteil (15).

13. Verfahren zum Vorregeln einer Versorgungsspannung für wenigstens eine elektronische Fahrzeugkomponente, insbesondere ein Fahrzeugsteuergerät, mittels einer Spannungsregeleinheit (10) vorzugsweise nach einem der Ansprüche 1 bis 11, wobei mittels einer zwischen Eingang (12) und Ausgang (14) geschalteten Induktivität (17) als Bestandteil eines Filters die elektromagnetischen Eigenschaften der Spannungsregeleinheit verbessert werden, **dadurch gekennzeichnet, dass** die Induktivität (17) außerdem als Energiespeicher eines Abwärtswandlers zur Erniedrigung der Ausgangsspannung (13) gegenüber der Eingangsspannung (11) verwendet wird und/oder die Induktivität (17) außerdem als Energiespeicher eines Aufwärtswandlers zur Erhöhung der Ausgangsspannung (13) gegenüber der Eingangsspannung (11) verwendet wird.

14. Verfahren nach Anspruch 13, **dadurch gekennzeichnet, dass** die Erniedrigung und/oder Erhöhung der dem Netzteil (15) als Ausgangsspannung (13) der Spannungsregeleinheit (10) zugeführten Spannung mittels der Induktivität (17) vorgenommen wird.

15. Verfahren nach Anspruch 13 oder 14, **dadurch gekennzeichnet, dass** wenigstens eine Diode (20, 22) und/oder wenigstens ein Kondensator (18, 19) eingangsseitig und/oder ausgangsseitig hinzu geschaltet werden/wird.

16. Verfahren nach einem der Ansprüche 13 bis 15, **dadurch gekennzeichnet, dass** die Erniedrigung und/oder Erhöhung der Ausgangsspannung (13) der Spannungsregeleinheit (10) mittels der Induktivität (17) durch wenigstens einen elektronischen Schalter (21, 23) und/oder Transistor (21, 23) geschaltet wird.

17. Verfahren nach einem der Ansprüche 13 bis 16, **dadurch gekennzeichnet, dass** die Erniedrigung und/oder Erhöhung der Ausgangsspannung (13) der Spannungsregeleinheit (10) automatisch aktiviert und/oder deaktiviert wird.

18. Verfahren nach einem der Ansprüche 13 bis 17, **dadurch gekennzeichnet, dass** bei Überschreiten eines vordefinierten Grenzwertes der Eingangsspannung (11) ein eingangsseitig der Induktivität (17) angeordneter Schalter (23) zumindest zeitweise geöffnet wird, wodurch eine Begrenzung der Ausgangsspannung (13) erfolgt, indem Strom von der Induktivität (17) über den Kondensator (19) zur Masse (16) geleitet wird über eine dann in Durchlassrichtung geschaltete Diode (22).

19. Verfahren nach einem der Ansprüche 13 bis 18, **dadurch gekennzeichnet, dass** bei Unterschreiten wenigstens eines vordefinierten Grenzwertes der Eingangsspannung (11) ein ausgangsseitig der Induktivität (17) angeordneter Schalter (21) zumindest zeitweise geschlossen wird, wodurch eine Erhöhung der Ausgangsspannung (13) erfolgt, indem die Induktivität ausgangsseitig mit Masse (16) verbunden wird und der Strom beim anschließenden Öffnen des Schalters (21) über die Induktivität (17) und die Diode (20) zum Kondensator (19) fließen kann.
